# EUROPEAN PATENT APPLICATION

(11) **EP 4 838 681 A1**
(43) Date of publication of application: **11.11.2026**
(21) Application number: 25857390.6
(22) Date of filing: 19.08.2025
(51) Int. Cl.: H01M 50/533, H01M 50/502, B21D 5/04

(54) **BATTERY UNIT MANUFACTURING DEVICE AND BATTERY UNIT MANUFACTURING METHOD USING SAME**

(30) Priority: 20.08.2024 KR 20240111377
(71) Applicant: LG Energy Solution, Ltd., Seoul 07335 (KR)
(72) Inventor: SHIN, Junkyung, Daejeon 34122 (KR); LIM, Seonyoung, Daejeon 34122 (KR)
(74) Representative: Plasseraud IP
(86) International application number: PCT/KR2025/012575
(87) International publication number: WO 2026/043254

(57) **Abstract**

A battery unit manufacturing device according to embodiments of the present disclosure may include a worktable configured to enable a battery cell assembly to be seated thereon, and at least one bending member configured to bend multiple lead tabs while moving with respect to the worktable at a position facing the battery cell assembly seated on the worktable, wherein the at least one bending member includes a base movable in a direction parallel to a first direction and a direction parallel to a second direction, a first pressing portion extending from the base in the second direction and configured to sequentially bend a first lead tab and a second lead tab as the base moves, and a second pressing portion spaced apart from the first pressing portion in the first direction and configured to press the bent first lead tab while the first pressing portion bends the second lead tab.

## Description

### Technical Field

The present disclosure relates to a battery unit manufacturing device and a battery unit manufacturing method using the same.

This application claims the benefit of Korean Patent Application No. 10-2024-0111377, filed on August 20, 2024, in the Korean Intellectual Property Office, the disclosure of which is incorporated herein by reference in its entirety.

### Background Art

Secondary batteries may be charged and discharged and are being widely utilized for mobile devices such as a digital camera, a cellphone, a laptop and the like, and, in particular, are recently coming to the fore as a large-capacity energy source to be applied to an electric vehicle, an energy storage system (ESS) and the like. In order to implement such a large-capacity energy source, a battery module or battery pack structure in which a plurality of secondary cells (battery cells) are serially or parallelly connected is being actively developed.

In a case in which a plurality of battery cells are serially or parallelly connected to manufacture a battery module or battery pack, a conductive bus bar and a lead tab of each battery cell are required to be electrically connected to each other, and, to this end, a lead tab bending process of bending a lead tab in order for the lead tab to be in contact with a bus bar may be performed.

In a lead tab bending process of prior art, there is a problem that, due to elasticity embodied by a metal material forming a lead tab, a lead tap which is firstly bent unfolds again while another lead tab is being bent, thereby interfering a bending process of the another lead tab. A phenomenon as such in which a bent lead tab unfolds again in an opposite direction to a bent direction is referred to as a spring-back phenomenon. In a case in which a spring-back phenomenon as such frequently occurs, concerns arise in that efficiency in a lead tab bending process may decrease, and concerns arise in that an overload may occur at equipment performing the corresponding process by interference between lead tabs. Furthermore, there is a problem that, as a lead tab unfolds again, a welding failure occurs in a welding process performed after the lead tab is bent.

### Detailed Description of the Invention

### Technical Goals

The present invention is disclosed to solve at least one portion of the above-described problems of related art, and provided are a battery unit manufacturing device and a battery unit manufacturing method using the same, which may prevent another lead tab which is already bent in a lead tab bending process from being unfolded again, thereby resolving a problem of interference between lead tabs.

### Technical solutions

To achieve the above-mentioned objectives, provided in example embodiments of the present disclosure is a battery unit manufacturing device including a worktable configured in order for a battery cell assembly including a plurality of lead tabs arranged to be spaced apart from each other in a first direction to be mounted thereon, and at least one bending member which is configured to move with respect to the worktable at a location facing the battery cell assembly mounted on the worktable in a second direction perpendicular to the first direction and bend a first lead tab and a second lead tab which are adjacent to each other among the plurality of lead tabs in directions facing each other, with the at least one bending member including a base movable in a direction being in parallel with the first direction and a direction being in parallel with the second direction, a first pressing part which extends from the base in the second direction, and is configured to sequentially bend the first lead tab and the second lead tab as the base moves, and a second pressing part which is arranged to be spaced apart from the first pressing part in the first direction, and presses the first lead tab which is bent while the first pressing part bends a second lead tab.

In example embodiments, the second pressing part extends from the base in the second direction, and a length of the second pressing part in the second direction is longer than a length of the first pressing part in the second direction.

In example embodiments, the first pressing part may include a first pressing body part extending from the base in the second direction, and a plurality of curved surface parts which are constituted with a curved surface structure and form both side corners of an end portion of the first pressing body part in the first direction.

In example embodiments, the plurality of curved surface parts constitute a mutually symmetrical structure with respect to a central axis of the first pressing body part.

In example embodiments, the second pressing part includes a second pressing body part extending from the base in the second direction, and a protruding part protruding from an end portion of the second pressing body part in a direction facing the first pressing part.

In example embodiments, the second pressing part further includes a chamfering surface arranged along a corner at an opposite side to the protruding part of the second pressing body part.

In example embodiments, a thickness of the first pressing body part in the first direction is thicker than a thickness of the second pressing body part in the first direction.

In example embodiments, the at least one bending member includes a first bending member and a second bending member which are arranged to be spaced apart from each other in the first direction, with the first bending member and the second bending member being mutually independently movable.

In example embodiments, provided is a battery unit manufacturing method including a preparing operation in which a battery cell assembly including a plurality of lead tabs arranged at one side of a bus bar assembly in a first direction by penetrating the bus bar assembly is aligned on a worktable, and a bending operation in which a bending member including a first pressing part and a second pressing part which are arranged to be spaced apart from each other in the first direction bends the plurality of lead tabs while moving with respect to the battery cell assembly, with the bending operation including a first bending operation in which the first pressing part bends a first lead tab by pressing one surface of the first lead tab among the plurality of lead tabs, and a second bending operation in which the first pressing part bends a second lead tab by pressing one surface of the second lead tab adjacent to the first lead tab among the plurality of lead tabs, with, in the second bending operation, the second pressing part pressing the one surface of the first lead tab which is bent.

In example embodiments, in the first bending operation, the bending member bends the first lead tab while moving in a direction facing an opposite surface of the one surface of the first lead tab from the one surface of the first lead tab, and, in the second bending operation, the bending member bends the second lead tab while moving toward a direction opposite to a moving direction of the bending member in the first bending operation.

In example embodiment, in the bending operation, the first lead tab and the second lead tab are bent to overlap in a second direction perpendicular to the first direction on one surface of a bus bar included in the bus bar assembly.

In example embodiments, the first bending operation includes bending, by the first pressing part, the one surface of the first lead tab by pressing the same in a direction being in parallel with the first direction, allowing, by the first pressing part, the one surface of the first lead tab to be in contact with the bus bar by pressing the same in the second direction, and moving the first pressing part along the one surface of the first lead tab in a state in which the first lead tab is in contact with the bus bar.

In example embodiment, the second bending operation includes aligning the bending member in order for the second lead tab to be located between the first pressing part and the second pressing part, moving the bending member in the second direction in order for the second pressing part to press the first lead tab to allow the same to be in contact with the bus bar, and bending, by the first pressing part, the second lead tab in a state in which the first lead tab is in contact with the bus bar by the second pressing part.

In example embodiments, the first lead tab and the second lead tab have polarities opposite to each other.

In example embodiments, provided is a battery unit manufacturing device including a worktable configured in order for a battery cell assembly to be mounted thereon, and a bending member which is spaced apart from the worktable, and is provided to be movable with respect to the worktable, with the bending member including a base extending in a first direction, a first pressing part protruding from the base in a second direction perpendicular to the first direction, and a second pressing part which protrudes from the base in the second direction, and is arranged to be spaced apart from the first pressing part in the first direction, with the second pressing part further including a protruding part formed to protrude in a direction facing the first pressing part at an end portion side which is remote from the base.

In example embodiments, the second pressing part has a length longer than that of the first pressing part in the second direction.

In example embodiments, the first pressing part has a thickness thicker than that of the second pressing part in the first direction.

In example embodiments, the first pressing part and the second pressing part are configured to come in contact with lead tabs of the battery cell assembly which are different from each other upon contact with the battery cell assembly.

In example embodiments, the lead tabs coming in contact with each of the first pressing part and the second pressing part are bent in directions different from each other upon contact with the battery cell assembly.

### Effects of the Invention

According to the example embodiments, it is possible to provide a battery unit manufacturing device and a battery unit manufacturing method using the same, which may resolve a problem of interference between lead tabs by preventing another lead tab which is already bent in a lead tab bending process from being unfolded again, and, accordingly, efficiency and welding quality of the lead tab bending process may be increased.

### Brief Description of Drawings

FIG. 1 is a perspective view of a battery unit manufacturing device according to example embodiments.
FIG. 2 is a reference diagram illustrating a battery cell assembly before a lead tab is bent.
FIG. 3 is a cross-sectional view of a bending member included in a battery unit manufacturing device according to example embodiments.
FIG. 4A to FIG. 4D are diagrams illustrating a first bending operation performed in a battery unit manufacturing device according to example embodiments.
FIG. 5A to FIG. 5E are diagrams illustrating a second bending operation performed in a battery unit manufacturing device according to example embodiments.

### Mode for Carrying Out the Invention

Before describing example embodiments in detail, the words and terminologies used in the specification and claims are not to be construed as limited to common or dictionary meanings but construed as meanings and concepts coinciding with the technical idea of the present disclosure under the principle that the inventor(s) may appropriately define the concept of the terms to explain his or her own invention in the best manner. Therefore, the example embodiments described herein and the configurations illustrated in the drawings are only the most desirable example embodiment of the present disclosure and do not fully cover the technical idea of the present disclosure, and thus, it should be understood that various equivalents and modification examples may be present as alternatives thereto when this application is filed.

The same reference numerals or symbols shown in each drawing of the present specification may indicate parts or elements that perform substantially the same function. For ease of explanation and understanding, different example embodiments may be described using the same reference numerals or symbols. That is, even though elements having the same reference numerals are shown in the plurality of drawings, the plurality of drawings may not all indicate one example embodiment.

In the following descriptions, terms in a singular form include terms in a plural form unless an apparently and contextually conflicting description is present. It should be understood that terms such as "comprise or include" and "form" are intended to indicate the presence of a feature, a number, a step, an operation, an element, a component or a combination thereof described in the specification and not intended to exclude the possibility of the presence or addition of one or more other features, numbers, steps, operations, elements, components or combinations thereof in advance.

In addition, it is clarified in advance that expressions such as upper side, upper portion, lower side, lower portion, side surface, front surface and rear surface are represented hereinafter with respect to a direction illustrated in a drawing and may be represented otherwise when the direction of a corresponding object changes.

In addition, in the present disclosure and claims, terms including ordinal numbers such as "first" or "second" may be used to distinguish between elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described with reference to the accompanying drawings. Nevertheless, the spirit of the present disclosure is not limited to the disclosed example embodiments. For example, a common person skilled in the art who understands the spirit of the present disclosure may suggest other example embodiments that are included within the scope of the spirit of the present disclosure through addition, change, or deletion of components. However, such example embodiments are also intended to be included within the scope of the spirit of the present disclosure. The shapes, sizes and the like of elements may be exaggerated in the drawings for clearer description.

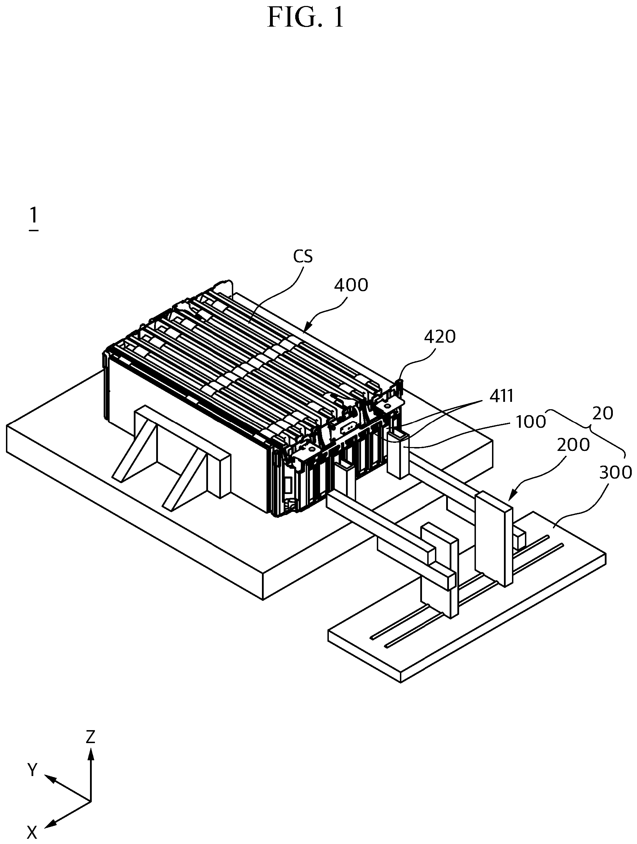

FIG. 1 is a perspective view of a battery unit manufacturing device 1 according to example embodiments.

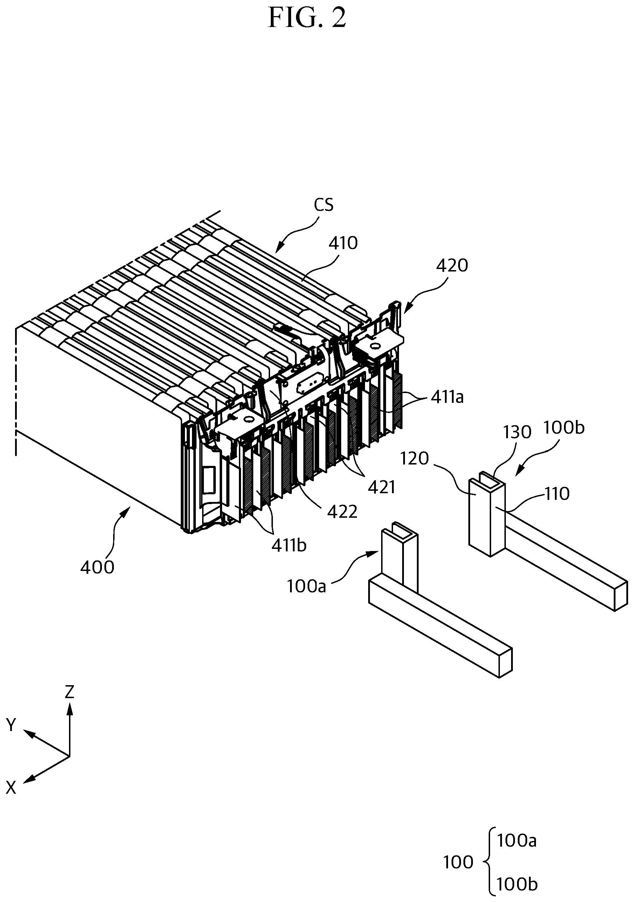

FIG. 2 is a reference diagram illustrating a battery cell assembly 400, before a lead tab 411 is bent, being mounted on a worktable.

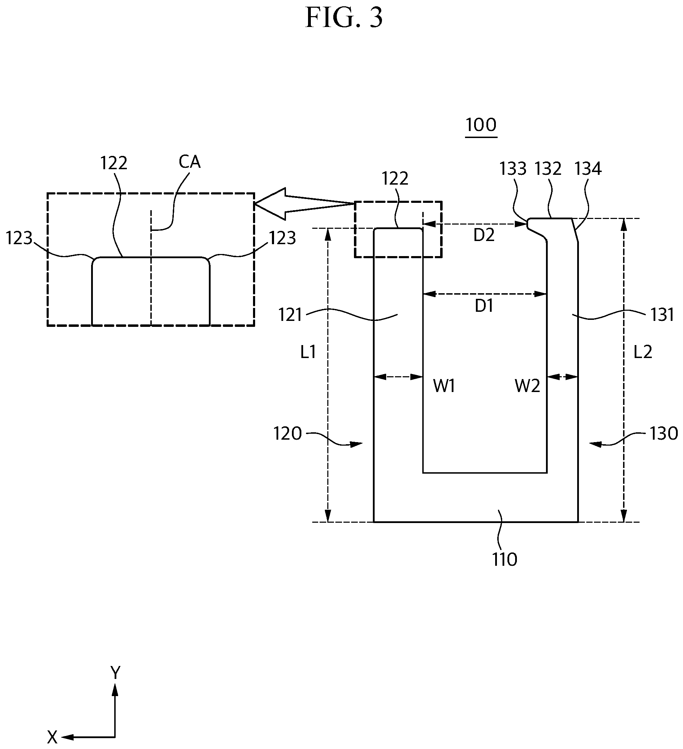

FIG. 3 is a cross-sectional view of a bending member 100 included in the battery unit manufacturing device 1 according to example embodiments.

The battery unit manufacturing device 1 according to example embodiments may manufacture the battery cell assembly 400 by assembling a cell stacking body CS at which a plurality of battery cells 410 are stacked and a bus bar assembly 420 with each other, and may manufacture a battery unit (or a battery cell unit) by packaging the manufactured battery cell assembly 400. In terms of description with respect to various example embodiments of the present disclosure, "battery unit" or "battery cell unit" may signify, not only "battery module" or "battery pack" in a general sense, but also various kinds of energy devices which may charge and discharge electric energy and includes the at least one battery cell 410 in a limitless manner.

Referring to FIG. 1 and FIG. 2, the battery unit manufacturing device 1 according to example embodiments may include a worktable 10 configured in order for the battery cell assembly 400 to be mounted thereon and a bending device 20 bending the lead tab 411 of the battery cell assembly 400 mounted on the worktable 10.

The battery cell assembly 400 which is a working target of the battery unit manufacturing device 1 according to example embodiments may include the cell stacking body CS at which the plurality of battery cells 410 are stacked and the bus bar assembly 420 including a plurality of bus bars 421.

The battery cell assembly 400 may be mounted on the worktable 10 in a state in which the lead tab 411 is not bent.

For instance, referring to FIG. 2, the lead tab (e.g., a first lead tab 411a and a second lead tab 411b) of the battery cell assembly 400 may penetrate the bus bar assembly 420 to be arranged along one surface of the bus bar assembly 420 while being located on the worktable 10 in a state of not being bent.

The bending device 20 included in the battery unit manufacturing device 1 may perform a bending process of bending the lead tab 411 while relatively moving with respect to the battery cell assembly 400 mounted on the worktable 10 in order for the lead tab 411 and the bus bar 421 of the bus bar assembly 420 to come in contact with each other. Meanwhile, the lead tab 411 which is completely bent may be welded and coupled to the bus bar 421 by a welding process performed after the bending process or at the same time as the bending process.

Hereinafter, a structure of the battery cell assembly 400 which is a working target will be described in more detail.

The plurality of battery cells 410 included in the battery cell assembly 400 may be stacked in one direction (e.g., a first direction) to form the cell stacking body CS. In the following description, a direction in which the battery cells 410 are stacked is referred to as "a cell stacking direction".

The battery cell 410 forming the cell stacking body CS may be a secondary battery which may be charged and discharged. For instance, referring to FIG. 1 and FIG. 2, the battery cell 410 may be a pouch-type secondary battery in which an electrode assembly is stored in a sealed pouch. Nevertheless, what is illustrated in FIG. 1 and FIG. 2 is merely an example of a shape of the battery cell 410 and the cell stacking body CS, and the battery cell 410 applied to a battery unit manufactured by the battery unit manufacturing device 1 according to example embodiments is not limited to a pouch-type secondary battery.

For instance, a battery cell according to various example embodiments may include a square-shaped secondary battery in which an electrode assembly is accommodated in a square-shaped case having a predetermined rigidity, or a cylindrical secondary battery in which an electrode assembly is accommodated in a cylindrical case.

In the battery cell 410, the lead tab 411 which is electrically connected to an electrode assembly in the battery cell 410 may extend to protrude to both sides or one side of the battery cell 410.

For instance, the battery cell 410 constituting the cell stacking body CS may have a structure in which the first lead tab 411a and the second lead tab 411b having a polarity opposite to that of the first lead tab 411a protrude to both sides of a longitudinal direction (e.g., a Y axis direction of FIG. 1 and FIG. 2) of the battery cell 410.

For instance, the first lead tab 411a may be a positive electrode tab, and the second lead tab 411b may be a negative electrode tab. As another instance, the first lead tab 411a may be a negative electrode tab, and the second lead tab 411b may be a positive electrode tab.

For instance, the first lead tab 411a may be a lead tab including copper (Cu), and the second lead tab 411b may be a lead tab including aluminum (Al).

In various example embodiments, as the battery cell 410 having such a both end tab structure is stacked in plural to form the cell stacking body CS, as illustrated in FIG. 1 and FIG. 2, the plurality of lead tabs 411 respectively extending from the plurality of battery cells 410 may be arranged in the cell stacking direction at one surface of the cell stacking body CS.

In the following description, unless stated otherwise, based on the battery cell assembly 400 aligned on the worktable 10, the cell stacking direction is referred to as the first direction, and a longitudinal direction of the battery cell 410 (or a direction in which the lead tab 411 extends from the battery cell 410) is referred to as a second direction.

For instance, the first direction and the second direction may intersect with each other.

For instance, the first direction and the second direction may be perpendicular to each other.

The bus bar assembly 420 included in the battery cell assembly 400 may include the plurality of bus bars 421 constituted with a conductive material and a bus bar frame 422 constituted with a non-conductive material while supporting the plurality of bus bars 421. At the bus bar frame 422, a plurality of slits through which the plurality of lead tabs 411 may pass may be formed.

The bus bar assembly 420 may be assembled at one side surface at which the lead tab 411 is arranged in the cell stacking body CS, and, accordingly, the lead tab 411 may be arranged in the first direction (e.g., an X axis direction of FIG. 1 and FIG. 2) in a state of protruding from one side of the bus bar assembly 420 by passing through the slit of the bus bar assembly 420. In such a state, the bending device 20 of the battery unit manufacturing device 1 may bend the lead tab 411 in order for the same to be in contact with the bus bar 421 by pressing one surface or the other surface of the lead tab 411.

In the battery cell assembly 400 which is a working target of the battery unit manufacturing device 1, the first lead tab 411a and the second lead tab 411b may be alternatingly arranged in the first direction (X axis direction). The bus bar 421 may be arranged between the first lead tab 411a and the second lead tab 411b.

The bending device 20 may bend the first lead tab 411a and the second lead tab 411b in directions different from each other, for instance, directions facing each other.

For instance, the bending device 20 may bend the first lead tab 411a to one side of the first direction (X axis direction), and, after then, bend the second lead tab 411b to the other side of the first direction (X axis direction).

Accordingly, the first lead tab 411a and the second lead tab 411b may come in contact with each other in a state of overlapping in the second direction (e.g., the Y axis direction of FIG. 1 and FIG. 2) on one surface of the bus bar 421.

Hereinafter, the bending device 20 according to example embodiments will be described in more detail.

In example embodiments, the bending device 20 may include the bending member 100 bending the lead tab 411 of the battery cell assembly 400 by pressing the same, a connecting link 200 coupled to the bending member 100, and a base frame 300 supporting the connecting link 200.

The connecting link 200 may be configured to move the bending member 100 in the first direction (X axis direction), the second direction (Y axis direction) and a third direction (Z axis direction) perpendicular to both of the first direction (X axis direction) and the second direction (Y axis direction).

For instance, the connecting link 200 may have a structure which may move in the first direction (X axis direction) on one surface of the base frame 300 while, at the same time, move the bending member 100 in the second direction (Y axis direction) or the third direction (Z axis direction). For instance, the connecting link 200 may have a multi-joint robotic arm structure.

Nevertheless, a specific structure of the connecting link 200 and the base frame 300 is not limited to what is described above. In the battery unit manufacturing device 1 according to example embodiments, the connecting link 200 and the base frame 300 may be constituted with any structure only if the bending member 100 may be supported to be movable in the first direction (X axis direction), the second direction (Y axis direction) and the third direction (Z axis direction).

In example embodiments, the bending device 20 may include at least one bending member 100. For instance, the bending device 20 may include the plurality of bending members 100. For instance, referring to FIG. 1 and FIG. 2, the bending device 20 may include a first bending member 100a and a second bending member 100b which are arranged to be spaced apart in the first direction (X axis direction).

In the bending device 20, the first bending member 100a and the second bending member 100b may be configured to mutually independently move to bend the lead tab 411.

For instance, while the first bending member 100a bends the plurality of lead tabs 411 arranged at any one area on the bus bar assembly 420 of the battery cell assembly 400, the second bending member 100b may bend the plurality of other lead tabs 411 which are arranged at the other area on the bus bar assembly 420.

In a process of bending a pair of the first lead tab 411a and the second lead tab 411b in directions facing each other by bending any one lead tab 411 before bending the remaining lead tab 411, due to elasticity embodied by a metal material constituting the lead tab 411, there might be concerns in that a so-called spring-back phenomenon in which the lead tab 411 which is firstly bent before the remaining lead tab 411 is bent is unfolded again in a direction opposite to the direction in which the same is bent may occur.

In a case in which such a spring-back phenomenon occurs, in a process of bending the lead tab 411, there might be concerns that a problem might occur in that the lead tabs 411 may mutually collide or interfere so as to deteriorate efficiency of a bending process and that the lead tab 411 is not sufficiently in contact with the bus bar 421.

To prevent such a spring-back phenomenon, each of the at least one bending member 100 of the battery unit manufacturing device 1 according to example embodiments may include a first pressing part 120 pressing the lead tab 411, and a second pressing part 130 which, while the first pressing part 120 bends a specific lead tab (e.g., the second lead tab 411b), presses another lead tab (e.g., the first lead tab 411a in a bent state) which is already bent.

For instance, while the first pressing part 120 presses the first lead tab 411a, the second pressing part 130 may not be in contact with other lead tabs or may partially be in contact with the first lead tab 411a.

Meanwhile, for instance, while the first pressing part 120 presses the second lead tab 411b, the second pressing part 130 may press the first lead tab 411a which is in a state of being bent by being in contact with the first lead tab 411a which is already bent by the first pressing part 120.

Referring to FIG. 3, the bending member 100 may include a base 110, the first pressing part 120 extending from the base 110 in the second direction (Y axis direction) and the second pressing part 130 which extends from the base 110 in the second direction (Y axis direction) while being arranged to be spaced apart from the first pressing part 120 in the first direction (X axis direction).

For instance, the base 110, the first pressing part 120 and the second pressing part 130 which are provided in the single bending device 20 may be integrally formed to move together according to an operation of the connecting link 200 in the first direction (X axis direction), the second direction (Y axis direction) and the third direction.

The first pressing part 120 of the bending member 100 may perform a function of a main pressing part which bends the lead tab 411 of the battery cell assembly 400 by pressing the same.

The first pressing part 120 may include a first pressing body part 121 extending from the base 110 in the second direction (Y axis direction), a first pressing surface 122 arranged at an end portion of the first pressing body part 121, and a plurality of curved surface parts 123 formed at both side corners of the first pressing surface 122 in the first direction (X axis direction).

The curved surface part 123 may be constituted with a curved surface structure while forming both side corners of the first direction (X axis direction) of an end portion of the first pressing body part 121. The curved surface part 123 may be a part at which the bending member 100 strongly presses the lead tab 411 in a process of moving to bend the lead tab 411. As the part is formed in a soft curved surface structure, the lead tab 411 may be prevented from being damaged in a process in which the lead tab 411 is pressed and bent, and the lead tab 411 may be more stably pressed.

In example embodiments, the bending member 100 may bend the lead tab 411 by using the both sides of the first pressing part 120 in the first direction (X axis direction). For instance, the bending member 100 may bend the first lead tab 411a by pressing the same with one side surface of the first pressing part 120 in the first direction (X axis direction), and may bend the second lead tab 411b by pressing the same with the other side surface of the first pressing part 120 in the first direction (X axis direction). As such, in order to stably utilize the both side surfaces of the first pressing part 120, the curved surface part 123 may be respectively formed at both side corners of an end portion of the first pressing body part 121 in the first direction (X axis direction). In such a case, as illustrated in a partial enlarged view of FIG. 3, the curved surface part 123 of both side corners of the first pressing body part 121 may form a mutually symmetrical structure with respect to a central axis CA of the first pressing body part 121.

The first pressing surface 122 is constituted with a surface perpendicular to the second direction (Y axis direction) which is a longitudinal direction of the first pressing body part 121, and may be used to strongly press the lead tab 411, which is bent to a certain degree, in the second direction (Y axis direction) to allow the same to be in contact with the bus bar 421.

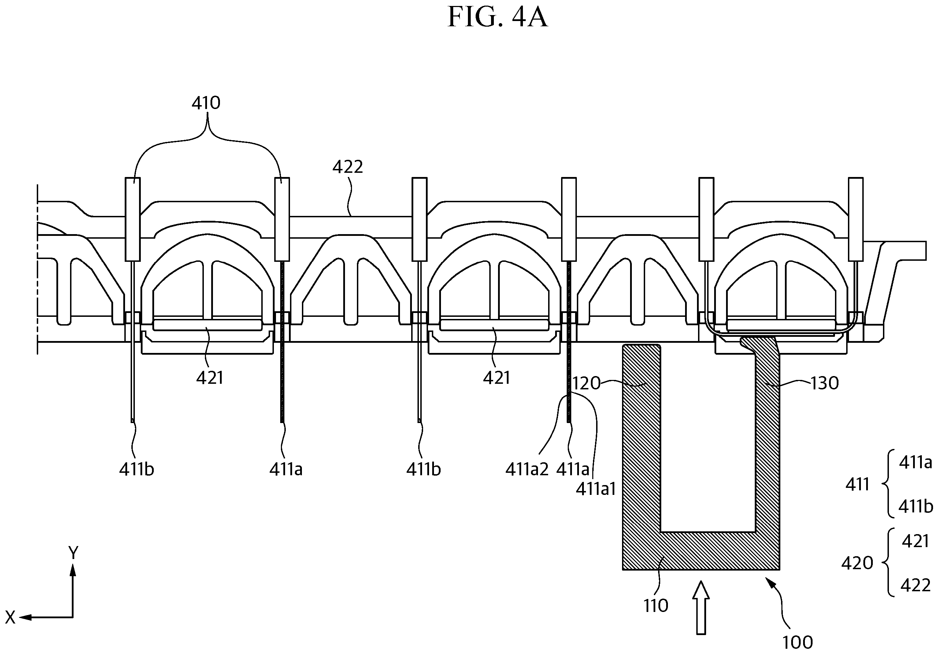

A specific process of bending the lead tab 411 by the first pressing part 120 will be described hereinafter with reference to FIGS. 4A through 5E.

With continued reference to FIG. 3, the second pressing part 130 of the bending member 100 may perform a function of an auxiliary pressing part which prevents a spring-back phenomenon from occurring by, while the first pressing part 120 bends the lead tab 411, pressing another lead tab 411 which is already bent. For instance, the bending member 100 may bend the first lead tab 411a by using the first pressing part 120 and then bend the second lead tab 411b in order to sequentially bend the first lead tab 411a and the second lead tab 411b in directions facing each other, and, in this process, the second pressing part 130 may, while the first pressing part 120 bends the second lead tab 411b, perform a function of pressing the first lead tab 411a which is already bent in order for the same not to be unfolded again.

The second pressing part 130 may include a second pressing body part 131 extending from the base 110 in the second direction (Y axis direction), and a protruding part 133 arranged at an end portion of the second pressing body part 131 to protrude from one surface facing the first pressing part 120 in the second pressing body part 131. For instance, the protruding part 133 may be formed to protrude in a direction facing the first pressing part 131 from an end portion side which is remote from the base 110 at the second pressing part 130.

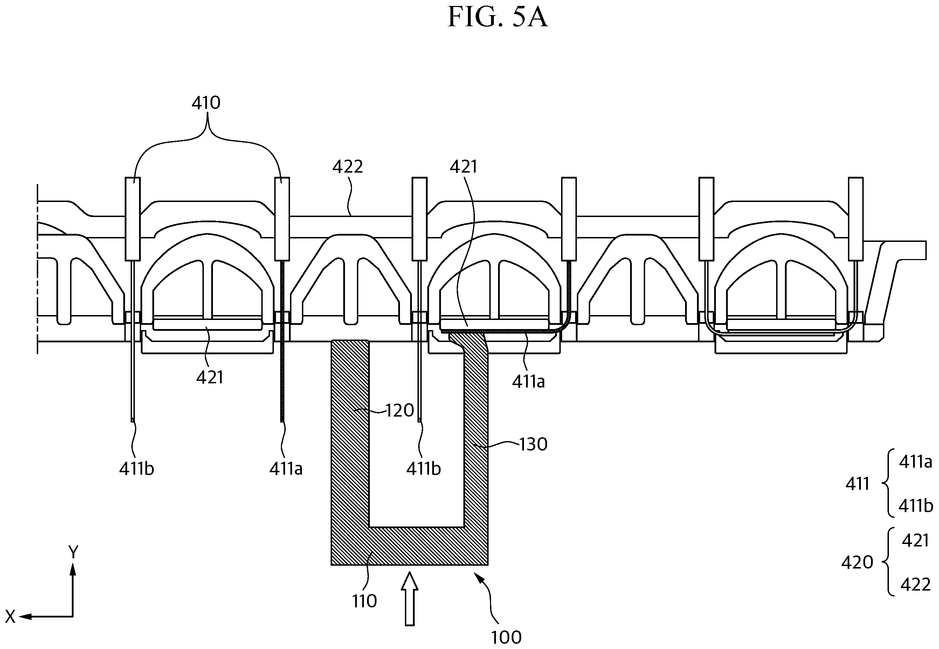

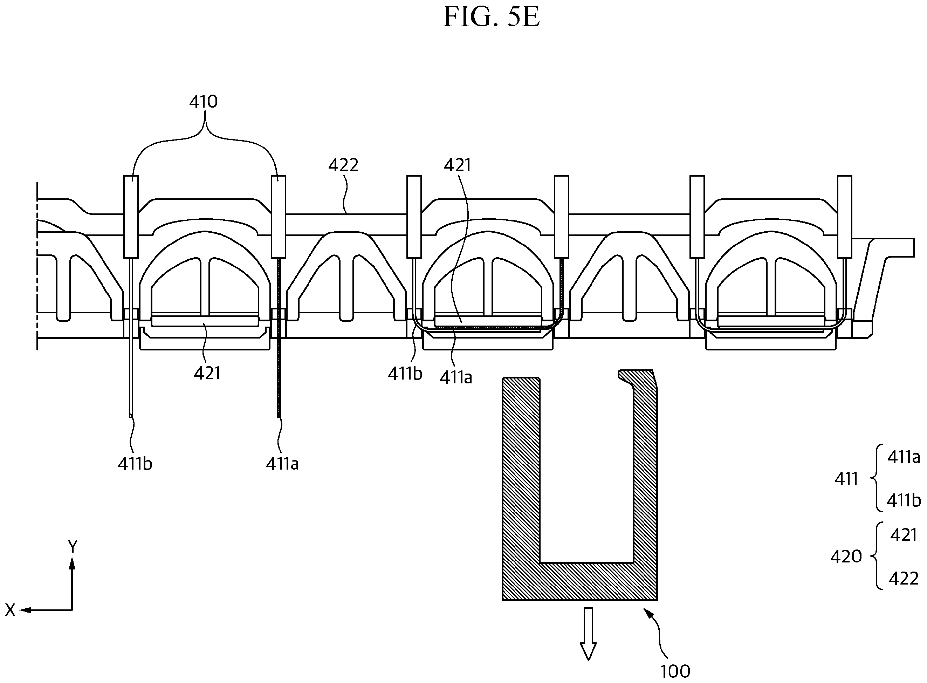

The protruding part 133 protrudes in a direction in which the second pressing part 130 faces the first pressing part 120, and, by such a protruding structure, the second pressing part 130 may be prevented from colliding against the lead tab 411 which is gradually bent by the first pressing part 120 while the second pressing part 130 presses the lead tab 411 which is already bent. Specific details with respect thereto will be described hereinafter with reference to FIG. 5A to FIG. 5E.

With continued reference to FIG. 3, a second pressing surface 132 which is a surface perpendicular to the second direction (Y axis direction) may be formed at an end portion of the second direction (Y axis direction) of the protruding part 133. The second pressing surface 132 may perform a function of pressing the lead tab 411 which is already bent in the second direction (Y axis direction) to allow the same to be in contact with the bus bar 421 while the first pressing part 120 bends another lead tab 411.

Meanwhile, the second pressing part 130 may further include a chamfering surface 134 which is arranged along a corner of an opposite side to the protruding part 133 of the second pressing body part 131. By such a chamfering structure, in a process in which the bending member 100 moves, the second pressing part 130 may be prevented from unnecessarily colliding against another lead tab 411.

Furthermore, because, as such, the protruding part 133 may be arranged at a corner of one side of an end portion of the second pressing part 130, and, a corner of the other side thereof is connected to the chamfering surface 134, the second pressing part 130 may be constituted with an asymmetric structure unlike that of the first pressing part 120.

In example embodiments, greater stress may be generated at the first pressing part 120 which presses and bends the lead tab 411 which is in an unfolded state than that at the second pressing part 130 which presses in order for the lead tab 411 which is already bent not to be unfolded. In order to provide a greater endurance against such a stress, a thickness W1 of the first pressing body part 121 may be formed to be thicker than a thickness W2 of the second pressing body part 131.

In example embodiments, while the first pressing part 120 bends the lead tab 411, in order to effectively press another lead tab 411 which is already bent, a length L2 of the second pressing part 130 may be longer than a length L1 of the first pressing part 120. For instance, referring to FIG. 3, the second pressing body part 131 may be formed to be lengthier than the first pressing body part 121, and, accordingly, a distance from the base 110 to the second pressing surface 132 may be greater than a distance from the base 110 to the first pressing surface 122. Furthermore, based on the battery cell assembly 400 which is a working target, the second pressing surface 132 may be located to be closer to the battery cell assembly 400 than the first pressing surface 122.

In example embodiments, because the protruding part 133 protrudes from the second pressing body part 131 in a direction of facing the first pressing part 120, based on the first direction (X axis direction), a distance D2 between an end portion of the protruding part 133 and the first pressing part 120 may be smaller than a distance D1 between the second pressing body part 131 and the first pressing part 120.

Hereinafter, with reference to FIGS. 4A through 5E, a process of bending the lead tab 411 by using the bending member 100 according to example embodiments will be described in detail.

Because a battery cell assembly and the bending member 100 described by FIGS. 4A through 5E correspond to the battery cell assembly 400 and the bending member 100 described in FIG. 1 to FIG. 3, duplicate description with respect to FIG. 1 to FIG. 3 may be omitted.

In example embodiments, a battery unit manufacturing method using the battery unit manufacturing device 1 may include a preparing operation of aligning the battery cell assembly 400 on the worktable 10, and a bending operation in which the bending member 100 moves with respect to the battery cell assembly 400 while bending the plurality of lead tabs 411 of the battery cell assembly 400.

In the preparing operation, the battery cell assembly 400 mounted on the worktable 10 may include the plurality of lead tabs 411 arranged at one side of the bus bar assembly 420 by penetrating the bus bar assembly 420 in the first direction (X axis direction). For instance, as described with reference to FIG. 2 above, the battery cell assembly 400 mounted on the worktable 10 may include the plurality of first lead tabs 411a and the plurality of second lead tabs 411b which are alternatingly arranged in the first direction (X axis direction) in a state of protruding to one surface of the bus bar assembly 420. Here, the plurality of first lead tabs 411a and the plurality of second lead tabs 411b may be aligned in a state of being unfolded without being bent.

In the bending operation, the bending member 100 including the first pressing part 120 and the second pressing part 130 which are arranged to be spaced apart from each other in the first direction (X axis direction) may bend the first lead tab 411a and the second lead tab 411b which are adjacent to each other in directions facing each other.

In example embodiments, the bending operation may include a first bending operation in which the first pressing part 120 bends the first lead tab 411a by pressing one surface of the first lead tab 411a among the plurality of lead tabs 411, and a second bending operation in which the first pressing part 120 bends the second lead tab 411b by pressing one surface of the second lead tab 411b which is adjacent to the first lead tab 411a among the plurality of lead tabs 411.

FIG. 4A to FIG. 4D illustrate the first bending operation performed in the battery unit manufacturing device 1 according to example embodiments.

Referring to FIG. 4A, the bending member 100 is prepared to bend the first lead tab 411a by advancing towards the bus bar assembly 420. In this process, the bending member 100 may advance until the second pressing part 130 comes in contact with the other lead tab 411 which is already bent. In the description hereinafter, "advance" of the bending member 100 signifies the bending member 100 moving in a direction of being closer to the bus bar assembly 420, and "retreat" of the bending member 100 signifies that the bending member 100 moves in a direction of being farther from the bus bar assembly 420.

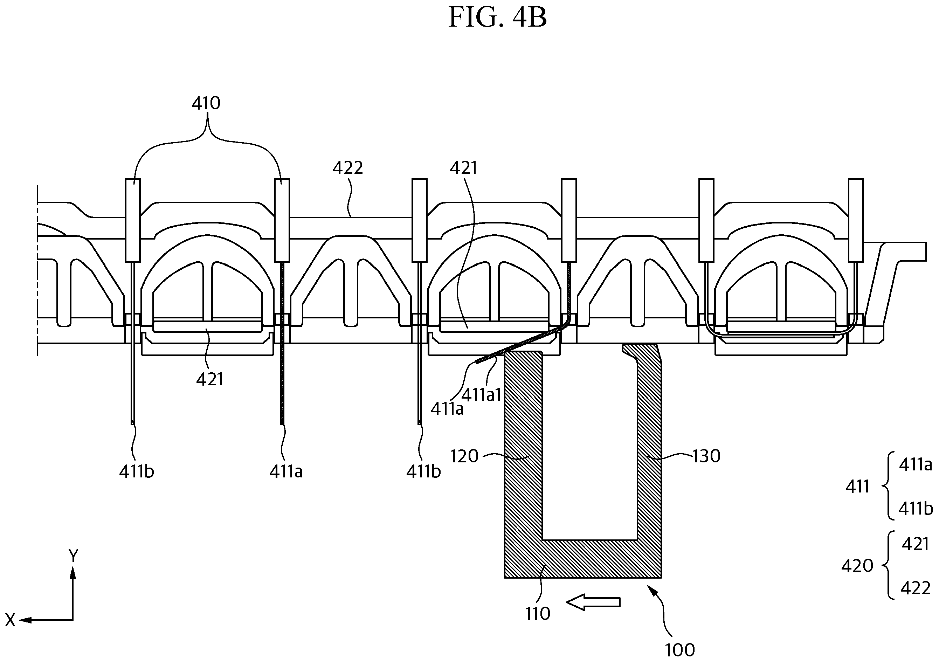

Referring to FIG. 4B, the bending member 100 moves in a direction of facing the other surface 411a2 of the first lead tab 411a from one surface 411a1 of the first lead tab 411a while pressing and bending the one surface 411a1 of the first lead tab 411a. Here, a moving direction of the bending member 100 may be a direction being in parallel with the first direction (X axis direction).

The first pressing body part 121 of the bending member 100 may bend the first lead tab 411a by pressurizing the same by one side surface in the first direction (X axis direction). As the bending member 100 continues to move, the first lead tab 411a is in contact with a curved surface part (e.g., the curved surface part 123 of FIG. 3) of the first pressing part 120, and the curved surface part 123 continuously presses the first lead tab 411a to bend the first lead tab 411a at a gradually greater angle.

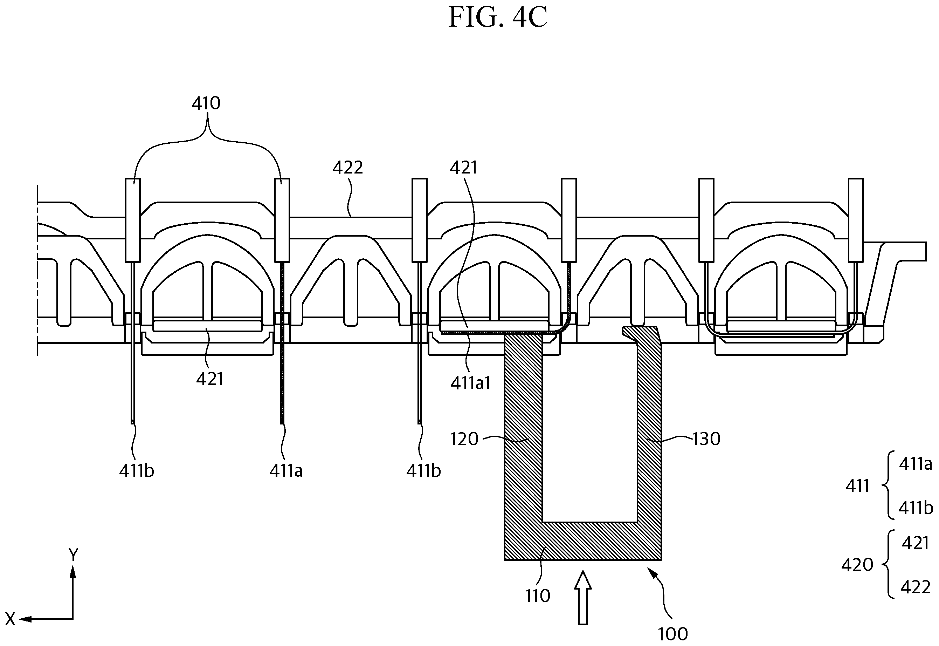

Referring to FIG. 4C, the bending member 100 enters up to a location at which a first pressing surface (e.g., the first pressing surface 122 of FIG. 3) of the first pressing part 120 faces the bus bar 421 in the second direction (Y axis direction) before advancing in a direction of facing the bus bar assembly 420, in other words, in the second direction (Y axis direction) to press the one surface 411a1 of the first lead tab 411a by using the first pressing surface 122 to allow the first lead tab 411a to completely be in contact with the bus bar 421.

Meanwhile, the bus bar frame 422 near the bus bar 421 may be recessed to a certain degree from a surface of the bus bar 421, and, accordingly, in a process in which the first pressing part 120 allows the first lead tab 411a to completely be in contact with the bus bar 421, the second pressing part 130 of which a length is longer than that of the first pressing part 120 may not collide against the bus bar frame 422.

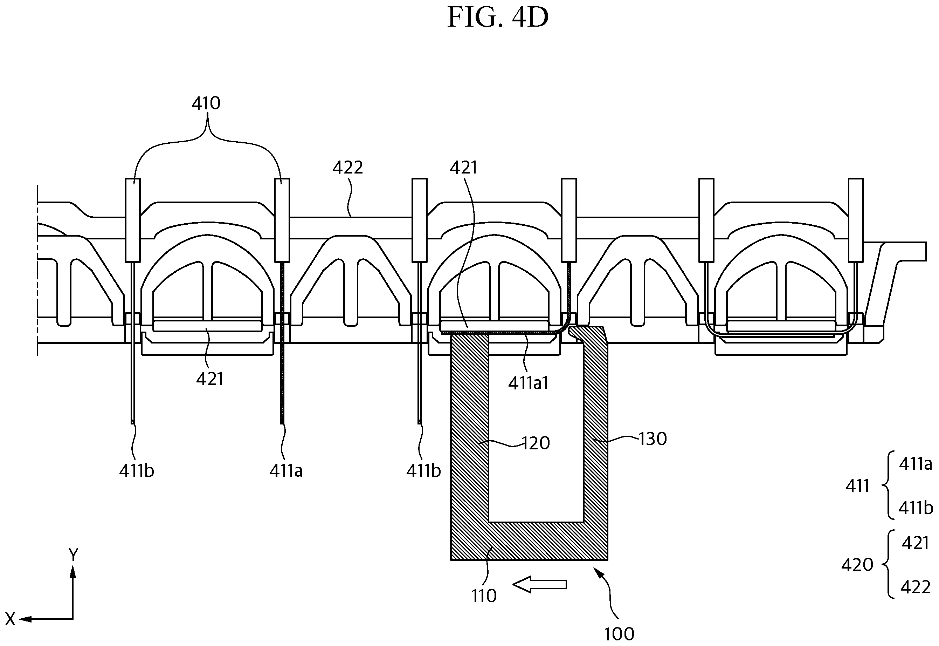

Referring to FIG. 4D, the bending member 100 may continuously press and bend the first lead tab 411a while moving along the one surface 411a1 of the first lead tab 411a in a state in which the first pressing part 120 allows the first lead tab 411a to be in contact with the bus bar 421.

In other words, referring to FIG. 4B to FIG. 4D, the first bending operation may include bending, by the first pressing part 120, the one surface 411a1 of the first lead tab 411a by pressing the same in a direction being in parallel with the first direction (X axis direction), allowing, by the first pressing part 120, the one surface 411a1 of the first lead tab 411a to be in contact with the bus bar 421 by pressing the same in the second direction (Y axis direction), and moving the first pressing part 120 along the one surface 411a1 of the first lead tab 411a in a state in which the first lead tab 411a is in contact with the bus bar 421.

When the first lead tab 411a is completely bent, the bending member 100 be prepared for performing the second bending operation by retreating from the bus bar assembly 420.

FIG. 5A to FIG. 5E illustrate the second bending operation performed in the battery unit manufacturing device 1 according to example embodiments.

Referring to FIG. 5A, the bending member 100 may advance towards the bus bar assembly 420 again to bend the second lead tab 411b which is to be welded to the first lead tab 411a which is bent. Here, the bending member 100 may advance in a state in which the second lead tab 411b which is a bending target is aligned to be located between the first pressing part 120 and the second pressing part 130. As the bending member 100 advances towards the bus bar assembly 420, a second pressing surface (e.g., the second pressing surface 132 of FIG. 3) of the second pressing part 130 presses the first lead tab 411a which is bent, and the first lead tab 411a is pressed by the second pressing part 130 to maintain a state of being in contact with the bus bar 421 without a spring-back phenomenon.

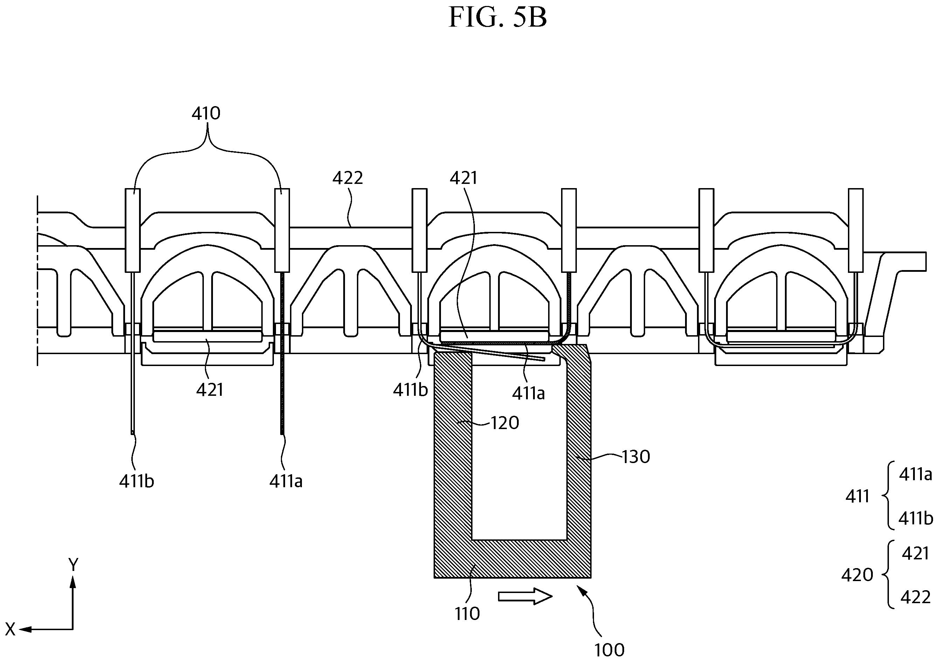

Referring to FIG. 5B, the bending member 100 may bend the second lead tab 411b by pressing the same while moving in a direction opposite to a moving direction when the first lead tab 411a is bent.

The first pressing body part 121 of the bending member 100 may bend the second lead tab 411b by pressurizing the same by the opposite side surface of the one side surface in the first direction (X axis direction), which has pressed the first lead tab 411a. As the bending member 100 continues to move, the second lead tab 411b may come in contact with a curved surface part (e.g., the curved surface part 123 of FIG. 3) of the first pressing part 120, and the curved surface part 123 may continuously press the second lead tab 411b to bend the second lead tab 411b at a gradually greater angle. In other words, the first pressing part 120 bends the first lead tab 411a by using one side corner and one side surface in the first direction (X axis direction) in the first bending operation, and may bend the second lead tab 411b by using the other side corner and the other side surface in the first direction (X axis direction) in the second bending operation.

In this process, the second pressing part 130 of the bending member 100 allows a second pressing surface (e.g., the second pressing surface 132 of FIG. 3) to continuously press the first lead tab 411a which is bent to continuously maintain a state in which the first lead tab 411a is in contact with the bus bar 421. Accordingly, a spring-back phenomenon may be prevented from occurring at the first lead tab 411a, and interference with the first lead tab 411a may be prevented in a bending process of the second lead tab 411b.

In particular, because the second pressing part 130 of the bending member 100 includes the protruding part 133 protruding in a direction facing the first pressing part 120 at one surface of the second pressing body part 131, the second lead tab 411b may be prevented from colliding against the second pressing body part 131 in a process of being bent and rotated by the first pressing part 120, and, at the same time, the first lead tab 411a may be pressed by a second pressing surface to prevent a spring-back phenomenon.

As for bending the second lead tab 411b, the second lead tab 411b may be bent at a smaller force in a case in which the first pressing part 120 presses the second lead tab 411b by being slightly spaced apart from the bus bar assembly 420 than in a case in which the first pressing part 120 presses a boundary area of the second lead tab 411b and the bus bar assembly 420. In the bending member 100 according to example embodiments, because the second pressing part 130 is formed to be lengthier than the first pressing part 120, even if the first pressing part 120 bends the second lead tab 411b by being slightly spaced apart from the bus bar assembly 420 in the second direction (Y axis direction), the second pressing part 130 may effectively press the first lead tab 411a which is bent to allow the same to be in contact with the bus bar 421.

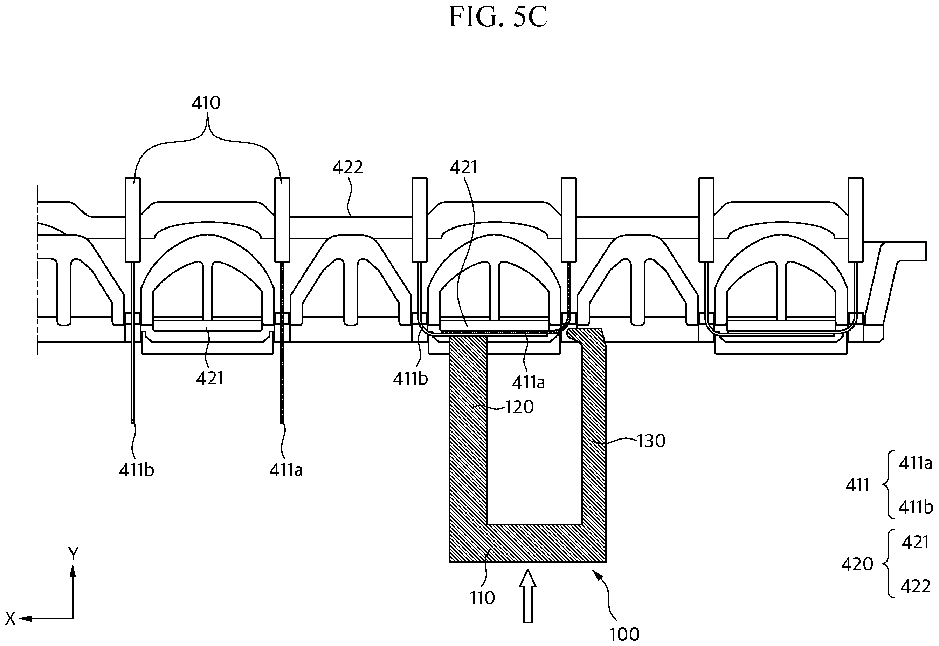

Referring to FIG. 5C, the bending member 100 enters up to a location at which a first pressing surface (e.g., the first pressing surface 122 of FIG. 3) of the first pressing part 120 faces the bus bar 421 in the second direction (Y axis direction) before advancing in a direction of facing the bus bar assembly 420, in other words, the second direction (Y axis direction), to press one surface of the second lead tab 411b by using the first pressing surface 122 to allow the second lead tab 411b to completely be in contact with the first lead tab 411a. In this process, in order to prevent the bending member 100 from being suppressed from advancing by the second pressing part 130, the bending member 100 may sufficiently move up to a location at which the second pressing part 130 does not overlap the first lead tab 411a in the second direction (Y axis direction) before advancing in the second direction (Y axis direction).

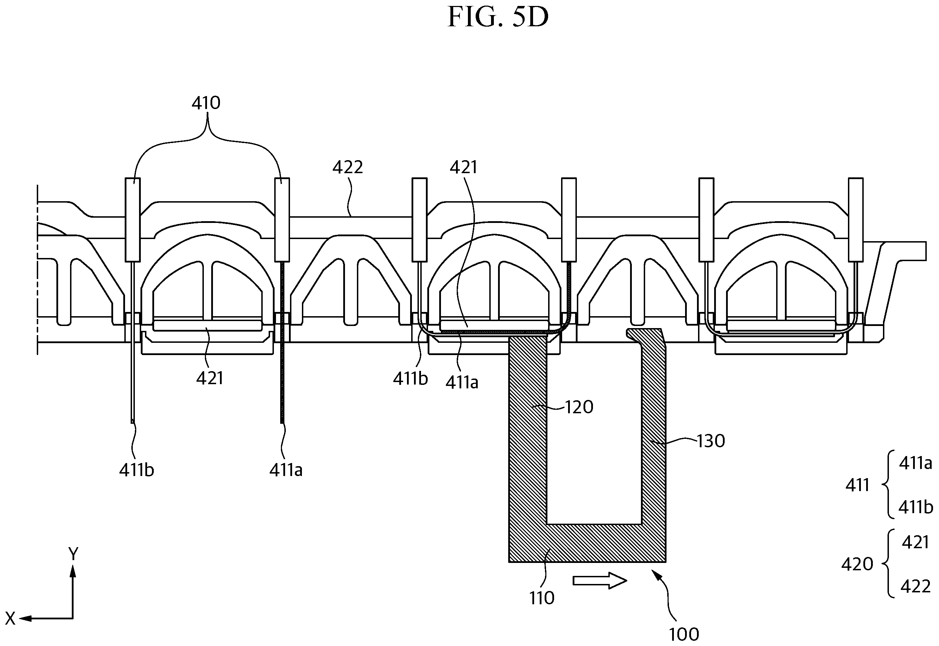

Referring to FIG. 5D, the bending member 100 may continuously press and bend the second lead tab 411b as the first pressing part 120 moves along the one surface of the second lead tab 411b in a state in which the second lead tab 411b is in contact with the first lead tab 411a.

For instance, referring to FIG. 5A to FIG. 5D, the second bending operation may include aligning the bending member 100 in order for the second lead tab 411b to be located between the first pressing part 120 and the second pressing part 130, moving the bending member 100 in the second direction (Y axis direction) in order for the second pressing part 130 to press the first lead tab 411a to allow the same to be in contact with the bus bar 421, bending, by the first pressing part 120, the second lead tab 411b in a state in which the first lead tab 411a is in contact with the bus bar 421 by the second pressing part 130, and allowing the second lead tab 411b and the first lead tab 411a to be in contact with each other, with the first pressing part 120 pressing the second lead tab 411b in the second direction (Y axis direction).

As such, when the second lead tab 411b is completely bent, a structure of the pair of lead tabs 411 which are bent in a state of being in close contact with each other on one surface of the bus bar 421 may be formed. The bending member 100 retreats from the bus bar assembly 420 to finish bending of the pair of the first lead tab 411a and the second lead tab 411b and is prepared for bending another adjacent pair of the first lead tab 411a and the second lead tab 411b.

The first lead tab 411a and the second lead tab 411b which are in contact with the bus bar 421 may be mutually welded and coupled by a welding process afterwards.

The battery unit manufacturing device 1 according to example embodiments may, by a structure of the first pressing part 120 and the second pressing part 130, prevent, in a process of bending the lead tab 411, another lead tab 411 which is already bent from being unfolded again to resolve interference between the lead tabs 411, and, accordingly, it may be expected that efficiency of a process of bending the lead tab 411 may be increased.

In particular, because the battery unit manufacturing device 1 according to example embodiments may effectively prevent an interference phenomenon from occurring as the lead tab 411 which is already bent is unfolded in a process of bending another lead tab 411 while performing a process of bending the two lead tabs 411 which are adjacent to each other in directions facing each other, a process of bending the lead tab 411 of the battery cell assembly 400 in which a positive electrode tab and a negative electrode tab are alternatingly arranged may be highly effectively performed.

Furthermore, because the battery unit manufacturing device 1 according to example embodiments may bend the adjacent two lead tabs 411 in order for the same to be stably in contact with each other on one surface of the bus bar 421, excellency in terms of welding quality may be expected.

While various example embodiments of the present disclosure are described in detail above, the scope of the present disclosure is not limited thereto, and it will be apparent to those of ordinary skill in the art that various modifications and variations may be made without departing from the technical idea of the present disclosure as defined by the appended claims. In addition, the aforementioned example embodiments may be implemented with some elements removed, and each example embodiment may be implemented in combination with each other.

## Claims

1. A battery unit manufacturing device comprising:
a worktable configured in order for a battery cell assembly comprising a plurality of lead tabs arranged to be spaced apart from each other in a first direction to be mounted thereon; and
at least one bending member which is configured to move with respect to the worktable at a location facing the battery cell assembly mounted on the worktable in a second direction perpendicular to the first direction and bend a first lead tab and a second lead tab which are adjacent to each other among the plurality of lead tabs in directions facing each other,
wherein the at least one bending member comprises:
a base movable in a direction parallel to the first direction and a direction parallel to the second direction;
a first pressing part which extends from the base in the second direction, and is configured to sequentially bend the first lead tab and the second lead tab as the base moves; and
a second pressing part which is arranged to be spaced apart from the first pressing part in the first direction, and presses the first lead tab which is bent while the first pressing part bends a second lead tab.

2. The battery unit manufacturing device of claim 1,
wherein the second pressing part extends from the base in the second direction, and
wherein a length of the second pressing part in the second direction is longer than a length of the first pressing part in the second direction.

3. The battery unit manufacturing device of claim 1, wherein the first pressing part comprises:
a first pressing body part extending from the base in the second direction; and
a plurality of curved surface parts which are constituted with a curved surface structure and form both side corners of an end portion of the first pressing body part in the first direction.

4. The battery unit manufacturing device of claim 3, wherein the plurality of curved surface parts constitute a mutually symmetrical structure with respect to a central axis of the first pressing body part.

5. The battery unit manufacturing device of claim 3, wherein the second pressing part comprises:
a second pressing body part extending from the base in the second direction; and
a protruding part protruding from an end portion of the second pressing body part in a direction facing the first pressing part.

6. The battery unit manufacturing device of claim 5, wherein the second pressing part further comprises a chamfering surface arranged along a corner at an opposite side to the protruding part of the second pressing body part.

7. The battery unit manufacturing device of claim 5, wherein a thickness of the first pressing body part in the first direction is thicker than a thickness of the second pressing body part in the first direction.

8. The battery unit manufacturing device of claim 1, wherein the at least one bending member comprises a first bending member and a second bending member which are arranged to be spaced apart from each other in the first direction,
wherein the first bending member and the second bending member are mutually independently movable.

9. A battery unit manufacturing method comprising:
a preparing operation in which a battery cell assembly including a plurality of lead tabs arranged at one side of a bus bar assembly in a first direction by penetrating the bus bar assembly is aligned on a worktable; and
a bending operation in which a bending member comprising a first pressing part and a second pressing part which are arranged to be spaced apart from each other in the first direction bends the plurality of lead tabs while moving with respect to the battery cell assembly,
wherein the bending operation comprises:
a first bending operation in which the first pressing part bends a first lead tab by pressing one surface of the first lead tab among the plurality of lead tabs; and
a second bending operation in which the first pressing part bends a second lead tab by pressing one surface of the second lead tab adjacent to the first lead tab among the plurality of lead tabs,
wherein, in the second bending operation, the second pressing part presses the one surface of the first lead tab which is bent.

10. The battery unit manufacturing method of claim 9, wherein, in the first bending operation, the bending member bends the first lead tab while moving in a direction facing an opposite surface of the one surface of the first lead tab from the one surface of the first lead tab, and
wherein, in the second bending operation, the bending member bends the second lead tab while moving in a direction opposite to a moving direction of the bending member in the first bending operation.

11. The battery unit manufacturing method of claim 9, wherein, in the bending operation, the first lead tab and the second lead tab are bent to overlap in a second direction perpendicular to the first direction on one surface of a bus bar included in the bus bar assembly.

12. The battery unit manufacturing method of claim 11, wherein the first bending operation comprises:
bending, by the first pressing part, the one surface of a first lead tab by pressing the same in a direction being in parallel with the first direction;
allowing, by the first pressing part, the one surface of the first lead tab to be in contact with the bus bar by pressing the same in the second direction; and
moving the first pressing part along the one surface of the first lead tab in a state in which the first lead tab is in contact with the bus bar.

13. The battery unit manufacturing method of claim 11, wherein the second bending operation comprises:
aligning the bending member in order for the second lead tab to be located between the first pressing part and the second pressing part;
moving the bending member in the second direction in order for the second pressing part to press the first lead tab to allow the same to be in contact with the bus bar; and
bending, by the first pressing part, the second lead tab in a state in which the first lead tab is in contact with the bus bar by the second pressing part.

14. The battery unit manufacturing method of claim 9, wherein the first lead tab and the second lead tab have polarities opposite to each other.

15. A battery unit manufacturing device comprising:
a worktable configured in order for a battery cell assembly to be mounted thereon; and
a bending member which is spaced apart from the worktable, and is provided to be movable with respect to the worktable,
wherein the bending member comprises:
a base extending in a first direction;
a first pressing part protruding from the base in a second direction perpendicular to the first direction; and
a second pressing part which protrudes from the base in the second direction, and is arranged to be spaced apart from the first pressing part in the first direction,
wherein the second pressing part further comprises a protruding part formed to protrude in a direction facing the first pressing part at an end portion side which is remote from the base.

16. The battery unit manufacturing device of claim 15,
wherein the second pressing part has a length longer than that of the first pressing part in the second direction.

17. The battery unit manufacturing device of claim 15,
wherein the first pressing part has a thickness thicker than that of the second pressing part in the first direction.

18. The battery unit manufacturing device of claim 15,
wherein the first pressing part and the second pressing part are configured to come in contact with lead tabs of the battery cell assembly which are different from each other upon contact with the battery cell assembly.

19. The battery unit manufacturing device of claim 18,
wherein the lead tabs coming in contact with each of the first pressing part and the second pressing part are bent in directions different from each other upon contact with the battery cell assembly.
